(19) Europäisches Patentamt

European Patent Office

Office européen des brevets

(11) Publication number: **0 213 698 B1**

# EUROPEAN PATENT SPECIFICATION

(45) Date of publication of patent specification: **13.11.91**

(51) Int. Cl.⁵: **C08J 5/18**, C08L 23/20, C08L 23/04, C08L 23/10, //(C08L23/20,23:04,23:10)

(21) Application number: **86305027.4**

(22) Date of filing: **27.06.86**

(54) Polymer blends for packaging film and sheet.

(30) Priority: **28.06.85 US 750342**

(43) Date of publication of application:
**11.03.87 Bulletin 87/11**

(45) Publication of the grant of the patent:
**13.11.91 Bulletin 91/46**

(84) Designated Contracting States:
**AT BE CH DE FR GB IT LI LU NL SE**

(56) References cited:
EP-A- 0 060 037    EP-A- 0 076 375
DE-B- 2 234 103    FR-A- 2 361 225
FR-A- 2 389 486    GB-A- 2 049 707
GB-A- 2 060 658

(73) Proprietor: **SHELL OIL COMPANY**
**900, Louisiana**
**Houston Texas 77001(US)**

Proprietor: **MITSUI PETROCHEMICAL INDUS-**
**TRIES, LTD.**
**2-5, Kasumigaseki 3-chome Chiyoda-ku**
**Tokyo 100(JP)**

(72) Inventor: **Hwo, Charles Chiu-Hsiung**
**2710, Sugarwood Drive**
**Sugarland Texas(US)**

(74) Representative: **Myerscough, Philip Boyd et al**
**J.A.Kemp & Co. 14, South Square Gray's Inn**
**London, WC1R 5EU(GB)**

**Description**

The present invention relates to a polymer blend suitable for use in providing heat sealable wrapping or packaging film or sheet capable of forming a peelable seal. The seal is achievable either between two films or sheets of this kind, or between one film or sheet of this kind and polypropylene packaging film or sheet without the need for an adhesive.

A peelable seal is defined to be the seal or joint between two films or sheets produced by heat sealing or impulse sealing, the joint thus formed having the property of being able to open in the original plane of joining of the two films or sheets by the action of a pulling force, without wrenching off or tearing occurring in the material of the two films or sheets used to make up the joint. For the purposes of the present invention, the peelable seal must possess a mechanical resistance sufficient to maintain the wholeness and the tight-seal properties of the packaging and wrapping during storage and transport until such time as the packaging or wrapping is opened by the user of the article. The mechanical resistance of the peelable seal must be low enough to permit ready manual opening of the joint, i.e. without the use of any auxiliary instrument.

In the past, many varieties of thermoplastic materials have been employed in the manufacture of films capable of forming peelable seals. For example, US-A-4,189,519 discloses a blend for producing a peelable heat seal comprising (1) 50 to 90 percent by weight of a copolymer of 80 to 96 percent by weight ethylene and 4 to 20 percent by weight of an ethylenically unsaturated ester, and (2) 10 to 50 percent by weight of a crystalline isotactic polybutylene. While capable of forming a peel seal, a film of this blend contains polybutylene as a minor component. A film of this blend bonds to high density polyethylene (HDPE) without the use of adhesive, but will not bond to polypropylene without an adhesive.

US-A-3,900,534 discloses thermoplastic shrink films with good heat seal characteristics and good optical properties, but does not address the need for a peel seal film.

There has been a long felt need for a wrapping or packaging material having easy peelability at the seal and yet which will bond to polypropylene without the aid of an adhesive.

It has now been found that certain properties including heat seal strength, and peel seal characteristics of wrapping films or sheets may be improved by fabricating films or sheets from blends of an ethylenic polymer, a high content butene-1 polymer and a propylene polymer. Such films or sheets may be bonded to a polypropylene substrate by extrusion lamination.

According to the invention there is provided a polymer blend suitable for use in producing a packaging film or sheet, which blend comprises a mixture containing (i) from 10 to 45 percent by weight of an ethylenic polymer, (ii) from 50 to 85 percent by weight of a butene-1 polymer and (iii) from 3 to 15 percent by weight of a propylene polymer. (In this specification the term "polymer" is used to denote both homopolymers and copolymers. Also when reference is made only to films it should be kept in mind that sheets may be formed as well).

Preferred blends are those which contain from 25 to 45 percent by weight of (i), from 50 to 70 percent by weight of (ii) and from 5 to 10 percent by weight of (iii) and an especially preferred blend contains about 25 percent by weight of (i), about 70 percent by weight of (ii) and about 5 percent by weight of (iii).

The ethylenic polymer (i) preferably is linear low density polyethylene (LLDPE), low density polyethylene (LDPE), medium density polyethylene (MDPE), ethylene vinyl acetate copolymer (EVA), ethylene-methyl acrylate copolymer (EMA) or high density polyethylene (HDPE) and most preferably is LDPE or EVA.

The butylene polymer (ii) preferably is polybutylene.

The propylene polymer (iii) serves to improve the processability of the mixture and preferably is polypropylene. The invention also provides films or sheets formed of a blend of the invention. The polymer blends may be formed into an oriented or unoriented film by casting or film blowing methods. Biaxially oriented film or sheet tubes can be prepared by extrusion and slit to provide flat sheet or film. After fabrication a film can be heat sealed by sealing jaws at a preset temperature, pressure and dwell. The seal strength is tested by an Instron tensile tester at 25.4 cm/min (10"/min) crosshead speed. Maximum strength on a 2.54 cm (one inch) width strip was designated as peel seal strength.

These manufacturing techniques apply to film, but the blends can be used to form sheeting. Film refers to shaped plastics that are comparatively thin and have a maximum thickness of 0.025 mm (0.010 inches). Sheeting refers to shaped plastics having a thickness greater than 0.025 mm (0.010 inches).

The present invention also provides a laminar structure which comprises a polypropylene substrate bonded to a film or sheet of the blend of the invention. The film or sheet of the blend of the invention provides a peel seal coat, which preferably consists of a mixture of high content polybutylene, polypropylene and either polyethylene or EVA, and can be coated or laminated onto the substrate. Thus the laminar structure can be made by making two separate films that are then laminated. The laminar structure may be prepared from two separate films which were prefabricated by either a film blowing (melt extrusion with a circular die) or a casting method (a flat die-melt extrusion process).

Melt extrusion with a flat die (casting) may be accomplished for thermoplastic polymers by using a flat die or slot die. The extrusion process starts with a polymer in a form that can be fed continuously into an extruder by means of a screw or pneumatic tube. Sometimes the polymers are combined with materials such as plasticizers, lubricants, stabilizers and colorants by means of, for example, Banbury mixers. The resulting mix is extruded through rod shaped dies and chipped into pellets. Pelletized polymer is fed into a screw conveyer into the end of a screw-type extruder and is heated and made into viscous fluid in a cylinder by means of a revolving, helical screw. The sheet emitting from the die is quenched on a temperature controlled chill roll. Finished films may be subject to a two-way stretching using continuous tenter-frame operations in biaxial orientation.

EXAMPLE

Polybutylene PB8240 having a melt index of about 2 g/10 min. (ASTM method D1238 condition E) and a density of about 0.910g/cm$^3$ was dry blended in a tumbler mixture with EVA (USI UE 632) and/or polypropylene (Shell PP5820). The resultant blends were extruded at a die temperature of about 216°C (420°F) into films about 50 μm (2 mils) thick each using a flat die. Peel sample strength was tested. The films were laminated together in face to face contact at 280 kPa (40 psi) pressure and dwell time of about 0.5 seconds. After the film was cooled, strips having a unit width of 2.54 cm (one inch) were cut from the film at locations across its width for testing of their seal strengths. Physical properties are given for the various films in the Table below (in which percentages are by weight).

## TABLE

### PEEL-SEAL STRENGTH OF CAST FILM FROM PB/EVA/PP BLENDS

| BLEND COMPOSITION | PEELABLE SEAL STRENGTH G/UNIT WIDTH* | | | | |
|---|---|---|---|---|---|
| | SEALING TEMPERATURE, °C | | | | |
| | 116 | 121 | 127 | 132 | 138 |
| 1. 25% EVA + 70% PB 8240 + 5% PP 5820 (Single Layer) | 188 | 363 | 272 | 410 | 699 |
| 2. 45% EVA + 50% PB 8240 + 5% PP 5820 (Single Layer) | 178 | 130 | 245 | 604 | 792 |
| 3. (25% EVA + 70% PB 8240 + 5% PP 5820)/PP (Laminated) | 372 | 493 | 385 | 455 | 618 |
| 4. (45% EVA + 50% PB 8240 + 5% PP 5820)/PP (Laminated) | 93 | 233 | 267 | 323 | 627 |

Note: Film Thickness is 50 $\mu$m (2 mils), Laminated film thickness is 114 $\mu$m + 50 $\mu$m (4.5 mils/2 mils), Sealing Conditions: 0.5 Sec. Dwell, 280 kPa (40 psi), Two Sides Heated and One Side with "Teflon" (Registered Trade Mark) Cloth. EVA is USI UE 632 ethylene vinyl acetate copolymer at MI = 7.5, PB 8240 is Shell Polybutylene at MI = 2.0 or MF = 5.0, PP 5820 is Shell Polypropylene at MF = 12.0 Seal strength tested by an Instron tester at 25.4 cm/min
*300 g/unit width (2.54 cm) = satisfactory peel seal

As may be seen from the Table, four different blend compositions were tested for seal strength in grams per 2.54 cm at sealing temperatures of 116, 121, 127, 132 and 138°C. A satisfactory peel seal value is 300 g/2.54 cm or above. Compositions No. 2 and 4 exhibited seal strengths greater than 300 g/2.54 cm at about 130°C. Compositions Nos. 1 and 3 (70% PB) exhibited seal strengths greater than 300 g/2.54 cm at about 120°C and 116°C, respectively. Peel seal strength was acceptable at a much lower sealing temperature at 70% PB than at 50% PB.

In summary it has been unexpectedly found that polymer blends of a propylene polymer, a polybutene-1 polymer, and an ethylenic polymer in accordance with the invention can provide unique films which have good peel seal strength, good processability and will bond by extrusion lamination to a polypropylene substrate in a laminar structure without the need for an adhesive to achieve such bonding.

## Claims

1. A blend suitable for use in producing a packaging film or sheet, which blend comprises a mixture containing (i) from 10 to 45 percent by weight of an ethylenic polymer, (ii) from 50 to 85 percent by weight of a butene-1 polymer and (iii) from 3 to 15 percent by weight of a propylene polymer.

2. A blend according to claim 1 which contains from 25 to 45 percent by weight of (i), from 50 to 70 percent by weight of (ii) and from 5 to 10 percent by weight of (iii).

3. A blend according to claim 1 which comprises about 25 percent by weight of (i), about 70 percent by weight of (ii) and about 5 percent by weight of (iii).

4. A blend according to claim 1, 2 or 3 wherein (i) is selected from linear low density polyethylene, low density polyethylene, medium density polyethylene, ethylene vinyl acetate copolymer, ethylene methyl acrylate copolymer and high density polyethylene.

5. A packaging film or sheet formed from a blend as claimed in any one of the preceding claims.

6. A film or sheet according to claim 5 which is an oriented film or sheet.

7. A film or sheet according to claim 6 which is a biaxially oriented film or sheet.

8. A laminate comprising a polypropylene substrate bonded by extrusion lamination to a film or sheet as claimed in claim 5, 6 or 7.

**Revendications**

1. Composition convenable pour être utilisée dans la production d'un film ou d'une feuille d'emballage, laquelle composition comprend un mélange contenant
   (i) de 10 à 45 % en poids d'un polymère éthylénique,
   (ii) de 50 à 85 % d'un polymère du butène-1,
   (iii) de 3 à 15 % en poids d'un polymère du propylène.

2. Composition conforme à la revendication 1, qui contient de 25 à 45 % en poids de (i), de 50 à 70 % en poids de (ii) et de 5 à 10 % en poids de (iii).

3. Composition conforme à la revendication 1, qui comprend environ 25 % en poids de (i), environ 70 % en poids de (ii) et environ 5 % en poids de (iii).

4. Composition conforme à la revendication 1, 2 ou 3, dans laquelle le polymère (i) est choisi parmi un polyéthylène basse densité linéaire, un polyéthylène basse densité, un polyéthylène moyenne densité, un copolymère éthylène/acétate de vinyle, un copolymère éthylène/acrylate de méthyle et un polyéthylène haute densité.

5. Film ou feuille d'emballage formé à partir d'une composition telle que revendiquée dans l'une quelconque des revendications précédentes.

6. Film ou feuille conforme à la revendication 5, qui est un film ou une feuille orienté.

7. Film ou feuille conforme à la revendication 6, qui est un film ou une feuille orienté biaxialement.

8. Stratifié comprenant un substrat en polypropylène, lié par extrusion-stratification à un film ou une feuille tel que revendiqué dans la revendication 5, 6 ou 7.

**Patentansprüche**

1. Eine Mischung, geeignet zur Verwendung bei der Herstellung eines/r Verpackungsfilms oder -folie, dadurch gekennzeichnet, daß die Mischung ein Gemisch umfaßt, das (i) 10 bis 45 Gew.-% eines ethylenischen Polymeren, (ii) 50 bis 85 Gew.-% eines Buten-1-Polymeren und (iii) 3 bis 15 Gew.-% eines Propylenpolymeren enthält.

2. Mischung nach Anspruch 1, dadurch gekennzeichnet, daß sie 25 bis 45 Gew.-% (i), 50 bis 70 Gew.-% (ii) und 5 bis 10 Gew.-% (iii) enthält.

3. Mischung nach Anspruch 1, dadurch gekennzeichnet, daß sie etwa 25 Gew.-% (i), etwa 70 Gew.-% (ii) und etwa 5 Gew.-% (iii) enthält.

4. Mischung nach Anspruch 1, 2 oder 3, dadurch gekennzeichnet, daß (i) aus linearem Polyethylen niedriger Dichte, Polyethylen niedriger Dichte, Polyethylen mittlerer Dichte, Ethylen-Vinylacetat-Copolymer, Ethylen-Methylacrylat-Copolymer und Polyethylen hoher Dichte ausgewählt ist.

5. Verpackungsfilm oder -folie, geformt aus einer Mischung, wie in einem der vorangehenden Ansprüche beansprucht.

6. Film oder Folie nach Anspruch 5, der/die ein/e orientierte/r Film oder Folie ist.

7. Film oder Folie nach Anspruch 6, der/die ein/e biaxial orientierte/r Film oder Folie ist.

8. Laminat, umfassend ein Polypropylensubstrat, das durch Extrusions-Kaschieren an einen Film oder eine Folie, wie in Anspruch 5, 6 oder 7 beansprucht, gebunden ist.